# DEMANDE DE BREVET EUROPEEN

(11) **EP 2 105 347 A1**
(43) Date de publication de la demande: **30.09.2009**
(21) Numéro de dépôt: 09290217.0
(22) Date de dépôt: 24.03.2009
(51) Int. Cl.: B60N 2/30, B60N 2/08

(54) **Siège de véhicule automobile comprenant un palonnier affaissable**

(30) Priorité: 25.03.2008 FR 0801629
(71) Demandeur: Centre d'Etude et de Recherche pour l'Automobile (CERA), 51100 Reims (FR)
(72) Inventeur: Le Gall, François, 02130 Coulonges (FR)
(74) Mandataire: Sayettat, Julien Christian

(57) **Abrégé**

L'invention concerne un siège (1) de véhicule automobile comprenant un rail fixe (2), un rail mobile (3), un moyen de verrouillage (4) réversible dudit rail mobile par rapport audit rail fixe, un brancard d'assise (5), une bielle (6) avant dont une première extrémité est montée en rotation selon un premier axe transversal (7) à l'avant dudit brancard d'assise et dont la deuxième extrémité est montée en rotation selon un deuxième axe transversal (8) à l'avant dudit rail mobile, de sorte à permettre un affaissement dudit brancard d'assise depuis une position d'utilisation vers une position d'escamotage, un palonnier (9) de déverrouillage dudit moyen de verrouillage lorsque ledit brancard d'assise est en position d'utilisation, ledit palonnier étant monté en rotation selon un troisième axe transversal (10) par rapport audit rail mobile et étant actionnable en rotation vers le haut pour effectuer le déverrouillage, ledit siège comprenant en outre un moyen d'appui (11) dudit palonnier lorsqu'il n'est pas actionné, de sorte à maintenir ledit palonnier en position haute facilitant son accès par l'utilisateur, ledit moyen d'appui étant disposé sur ladite bielle au dessus dudit deuxième axe, le pivotement de ladite bielle vers le bas lors de la mise en position escamotée libérant la mise en rotation vers le bas dudit palonnier.

## Description

II est connu de réaliser un siège de véhicule automobile comprenant :
- un rail fixe destiné à être fixé au plancher dudit véhicule,
- un rail mobile monté en translation longitudinale sur ledit rail fixe,
- un moyen de verrouillage réversible dudit rail mobile par rapport audit rail fixe selon une pluralité de positions longitudinales,
- un brancard d'assise,
- une bielle avant dont une première extrémité est montée en rotation selon un premier axe transversal à l'avant dudit brancard d'assise et dont la deuxième extrémité est montée en rotation selon un deuxième axe transversal à l'avant dudit rail mobile, de sorte à permettre un pivotement vers le bas de ladite bielle et un affaissement dudit brancard d'assise depuis une position d'utilisation vers une position d'escamotage,
- un palonnier de déverrouillage dudit moyen de verrouillage lorsque ledit brancard d'assise est en position d'utilisation, ledit palonnier étant monté en rotation selon un troisième axe transversal par rapport audit rail mobile et étant actionnable en rotation vers le haut pour effectuer le déverrouillage.

Le palonnier est situé usuellement sous l'assise du siège et présente usuellement une forme générale de U, l'entretoise centrale du U étant accessible par l'utilisateur pour effectuer le réglage longitudinal du siège.

Pour des raisons d'ergonomie, il est souhaitable que le palonnier soit disposé à une certaine hauteur, ce qui peut entraver l'affaissement du brancard d'assise avec lequel il est susceptible d'entrer en interférence.

L'invention a pour but de pallier cet inconvénient.

A cet effet, l'invention propose un siège de véhicule automobile comprenant :
- un rail fixe destiné à être fixé au plancher dudit véhicule,
- un rail mobile monté en translation longitudinale sur ledit rail fixe,
- un moyen de verrouillage réversible dudit rail mobile par rapport audit rail fixe selon une pluralité de positions longitudinales,
- un brancard d'assise,
- une bielle avant dont une première extrémité est montée en rotation selon un premier axe transversal à l'avant dudit brancard d'assise et dont la deuxième extrémité est montée en rotation selon un deuxième axe transversal à l'avant dudit rail mobile, de sorte à permettre un pivotement vers le bas de ladite bielle et un affaissement dudit brancard d'assise depuis une position d'utilisation vers une position d'escamotage,
- un palonnier de déverrouillage dudit moyen de verrouillage lorsque ledit brancard d'assise est en position d'utilisation, ledit palonnier étant monté en rotation selon un troisième axe transversal par rapport audit rail mobile et étant actionnable en rotation vers le haut pour effectuer le déverrouillage,
ledit siège comprenant en outre un moyen d'appui dudit palonnier lorsqu'il n'est pas actionné, de sorte à maintenir ledit palonnier en position haute facilitant son accès par l'utilisateur, ledit moyen d'appui étant disposé sur ladite bielle au dessus dudit deuxième axe, le pivotement de ladite bielle vers le bas lors de la mise en position escamotée libérant la mise en rotation vers le bas dudit palonnier, de sorte à le disposer en position basse et à libérer un espace permettant l'affaissement dudit brancard d'assise.

Dans cette description, les termes de positionnement dans l'espace (haut, bas, longitudinal, transversal, latéral,...) sont pris en référence au siège disposé dans le véhicule.

D'autres particularités et avantages de l'invention apparaîtront dans la description qui suit, faite en référence aux figures jointes dans lesquelles :

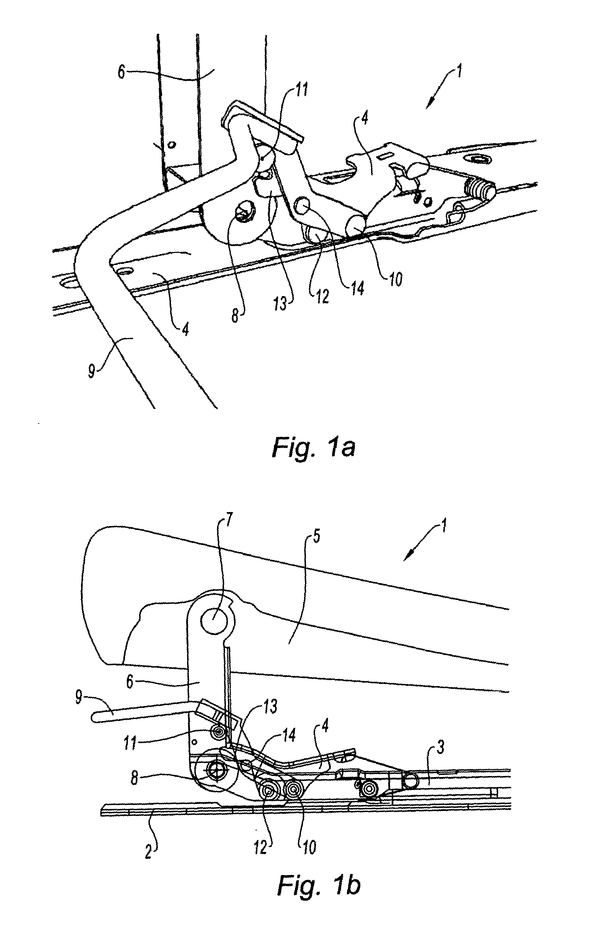

- la figure 1 est une représentation schématique partielle en perspective (a) et en vue latérale (b) d'un siège selon un mode de réalisation, le brancard d'assise étant en position d'utilisation et le palonnier étant non actionné vers le haut,

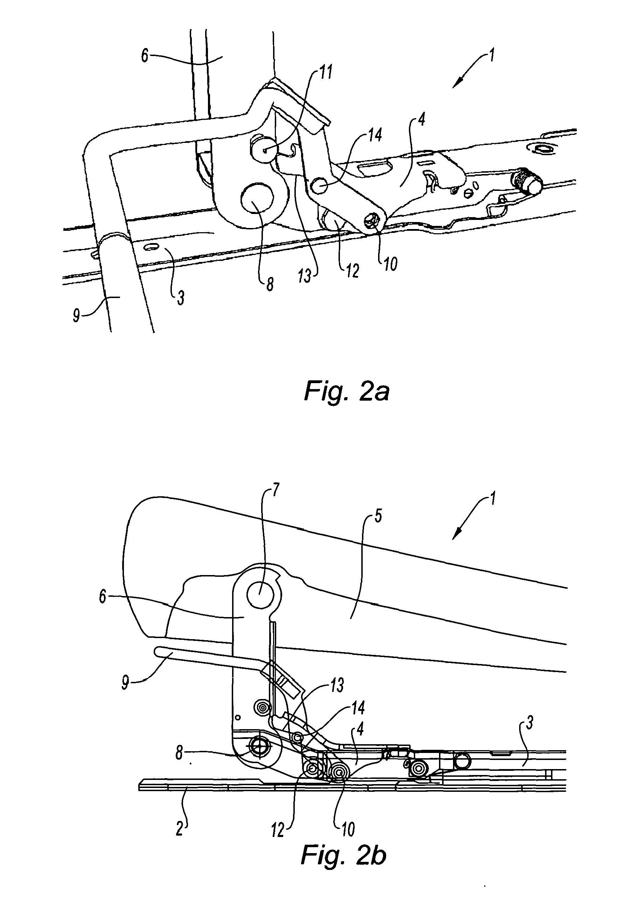

- la figure 2 est une représentation schématique partielle en perspective (a) et en vue latérale (b) du siège de la figure 1, le brancard d'assise étant en position d'utilisation et le palonnier étant actionné vers le haut,

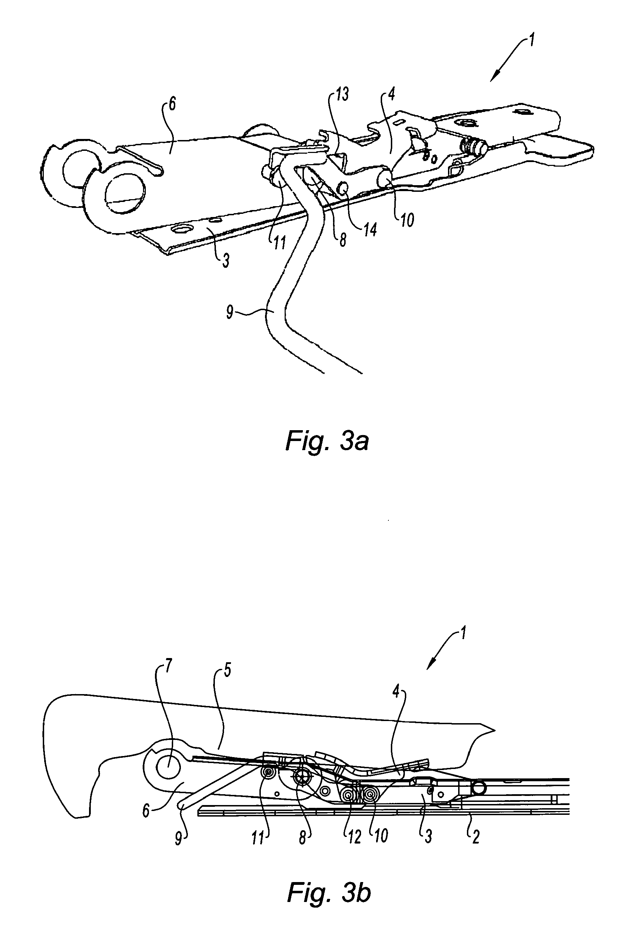

- la figure 3 est une représentation schématique partielle en perspective (a) et en vue latérale (b) du siège de la figure 1, le brancard d'assise étant en position d'escamotage.

En référence aux figures, on décrit un siège 1 de véhicule automobile comprenant :
- un rail fixe 2 destiné à être fixé au plancher dudit véhicule,
- un rail mobile 3 monté en translation longitudinale sur ledit rail fixe,
- un moyen de verrouillage 4 réversible dudit rail mobile par rapport audit rail fixe selon une pluralité de positions longitudinales,
- un brancard d'assise 5,
- une bielle 6 avant dont une première extrémité est montée en rotation selon un premier axe transversal 7 à l'avant dudit brancard d'assise et dont la deuxième extrémité est montée en rotation selon un deuxième axe transversal 8 à l'avant dudit rail mobile, de sorte à permettre un pivotement vers le bas de ladite bielle et un affaissement dudit brancard d'assise depuis une position d'utilisation vers une position d'escamotage,
- un palonnier 9 de déverrouillage dudit moyen de verrouillage lorsque ledit brancard d'assise est en position d'utilisation, ledit salonnier étant monté en rotation par rapport audit rail mobile selon un troisième axe 10 et étant actionnable en rotation vers le haut pour effectuer le déverrouillage,
ledit siège comprenant en outre un moyen d'appui 11 dudit palonnier lorsqu'il n'est pas actionné, de sorte à maintenir ledit palonnier en position haute facilitant son accès par l'utilisateur, ledit moyen d'appui étant disposé sur ladite bielle au dessus dudit deuxième axe, le pivotement de ladite bielle vers le bas lors de la mise en position escamotée libérant la mise en rotation vers le bas dudit palonnier, de sorte à le disposer en position basse et à libérer un espace permettant l'affaissement dudit brancard d'assise.

Selon la réalisation représentée, le palonnier 9 est monté en rotation sur le moyen de verrouillage 4.

En variante non représentée, le palonnier 9 peut être monté en rotation sur le rail mobile 3.

Le palonnier 9 présente sensiblement une forme de U s'étendant selon la largeur du siège 1, les extrémités libres du U étant montées en rotation sur deux rails mobiles 3 respectifs disposés de part et d'autre de la largeur dudit siège, ledit siège comprenant deux bielles 6 respectivement solidaires desdits rails mobiles et de deux brancards d'assise 5 respectifs, le moyen d'appui 11 comprenant au moins un doigt saillant transversalement d'au moins une desdites bielles, ledit palonnier s'appuyant sur ledit doigt dans une zone située sur une branche du U.

Le moyen de verrouillage 4 est monté en rotation sur le rail mobile, entre une position de verrouillage et une position de déverrouillage, selon un quatrième axe transversal 12, et comprend une butée 13, le palonnier 9 comprenant un doigt d'entraînement 14, ladite butée étant agencée pour coopérer avec ledit doigt et permettre la rotation dudit moyen de verrouillage vers sa position de déverrouillage lorsque ledit palonnier est actionné en rotation vers le haut.

Le doigt 14 est disposé sur une branche du U, ledit doigt saillant transversalement du palonnier 9.

## Revendications

1. Siège (1) de véhicule automobile comprenant :
• un rail fixe (2) destiné à être fixé au plancher dudit véhicule,
• un rail mobile (3) monté en translation longitudinale sur ledit rail fixe,
• un moyen de verrouillage (4) réversible dudit rail mobile par rapport audit rail fixe selon une pluralité de positions longitudinales,
• un brancard d'assise (5),
• une bielle (6) avant dont une première extrémité est montée en rotation selon un premier axe transversal (7) à l'avant dudit brancard d'assise et dont la deuxième extrémité est montée en rotation selon un deuxième axe transversal (8) à l'avant dudit rail mobile, de sorte à permettre un pivotement vers le bas de ladite bielle et un affaissement dudit brancard d'assise depuis une position d'utilisation vers une position d'escamotage,
• un palonnier (9) de déverrouillage dudit moyen de verrouillage lorsque ledit brancard d'assise est en position d'utilisation, ledit palonnier étant monté en rotation selon un troisième axe transversal (10) par rapport audit rail mobile et étant actionnable en rotation vers le haut pour effectuer le déverrouillage,
ledit siège étant **caractérisé en ce qu'**il comprend en outre un moyen d'appui (11) dudit palonnier lorsqu'il n'est pas actionné, de sorte à maintenir ledit palonnier en position haute facilitant son accès par l'utilisateur, ledit moyen d'appui étant disposé sur ladite bielle au dessus dudit deuxième axe, le pivotement de ladite bielle vers le bas lors de la mise en position escamotée libérant la mise en rotation vers le bas dudit palonnier, de sorte à le disposer en position basse et à libérer un espace permettant l'affaissement dudit brancard d'assise.

2. Siège selon la revendication 1, **caractérisé en ce que** le palonnier (9) est monté en rotation sur le moyen de verrouillage (4).

3. Siège selon la revendication 1, **caractérisé en ce que** le palonnier (9) est monté en rotation sur le rail mobile (3).

4. Siège selon l'une quelconque des revendications 1 à 3, **caractérisé en ce que** le palonnier (9) présente sensiblement une forme de U s'étendant selon la largeur dudit siège, les extrémités libres du U étant montées en rotation sur deux rails mobiles (3) respectifs disposés de part et d'autre de la largeur dudit siège, ledit siège comprenant deux bielles (6) respectivement solidaires desdits rails mobiles et de deux brancards d'assise (5) respectifs, le moyen d'appui (11) comprenant au moins un doigt saillant transversalement d'au moins une desdites bielles, ledit palonnier s'appuyant sur ledit doigt dans une zone située sur une branche du U.

5. Siège selon l'une quelconque des revendications 1 à 4, **caractérisé en ce que** le moyen de verrouillage (4) est monté en rotation sur le rail mobile (3), entre une position de verrouillage et une position de déverrouillage, selon un quatrième axe transversal (12), et comprend une butée (13), le palonnier (9) comprenant un doigt d'entraînement (14), ladite butée étant agencée pour coopérer avec ledit doigt et permettre la rotation dudit moyen de verrouillage vers sa position de déverrouillage lorsque ledit palonnier est actionné en rotation vers le haut.

6. Siège selon la revendication 5, **caractérisé en ce que** le doigt (14) est disposé sur une branche du U, ledit doigt saillant transversalement du palonnier (9).
